# EUROPEAN PATENT SPECIFICATION

(11) **EP 2 846 208 B1**
(45) Date of publication and mention of the grant of the patent: **27.03.2019**
(21) Application number: 14184283.1
(22) Date of filing: 10.09.2014
(51) Int. Cl.: H04L 29/06, G05B 19/418, H04L 29/08

(54) **Remote asset management services for industrial assets**
Entfernte Ressourcen Verwaltung-Dienstleistungen für Industrielle Ressourcen
Services de gestion de ressources pour des ressources industrielles

(30) Priority: 10.09.2013 US 201361875966 P; 05.09.2014 US 201414479024
(43) Date of publication of application: 11.03.2015
(73) Proprietor: Rockwell Automation Technologies, Inc., Mayfield Heights, OH 44124 (US)
(72) Inventor: Vasko, David A., WI, 53029 Hartland (US); Conti, Salvatore, OH, 44138 Township (US); Hessmer, Rainer, CA, 95032 Los Gatos (US); Kann, Joseph Alan, WI, 53402 Racine (US); Whitehead, Clifford J., OH, 44119 Cleveland (US); Strohmenger, John, OH, 44136 Strongsville (US); Chand, Sujeet, WI, 53045 Brookfield (US); Hill, Edward Alan, OH, 44022 Falls (US); Jasper, Taryl J., OH, 44121 South Euclid (US); Asenjo, Juan L., OH, 44095 Timberlake (US)
(74) Representative: Grünecker Patent- und Rechtsanwälte PartG mbB

(56) References cited:
- WO-A1-2013/101215
- US-A1- 2012 179 802
- US-A1- 2012 278 454
- US-A1- 2013 211 546

## Description

### BACKGROUND

This disclosure relates generally to systems and methods for remotely viewing and configuring an industrial asset over a cloud infrastructure.

US 2012/179802 A1 discloses a cloud extension agent which can be provided on a customer premise for interfacing, via an outbound secure connection, cloud based services. The cloud extension agent can reach the cloud based services through existing firewall infrastructure, thereby providing simple, secure deployment. Furthermore, the secure connection can enable substantially real-time communication with a cloud service to provide web-based, substantially real time control or management of resources on the customer premises via the cloud extension agent.

### SUMMARY

It is the object of the present invention to provide an improved apparatus for remotely viewing and configuring an industrial asset over a cloud infrastructure, as well as a corresponding method.

This object is solved by the subject matter of the independent claims.

Preferred embodiments are defined by the dependent claims.

The following presents a simplified summary in order to provide a basic understanding of some aspects described herein. This summary is not an extensive overview nor is it intended to identify key/critical elements or to delineate the scope of the various aspects described herein. Its sole purpose is to present some concepts in a simplified form as a prelude to the more detailed description that is presented later. The invention is defined by the appended independent claims. Further embodiments are defined by the dependent claims.

In one or more embodiments, a remote asset server is provided, comprising a cloud interface component configured to communicatively couple the remote asset server to a cloud platform; an asset interface component configured to communicatively couple the remote asset server to an industrial asset; and a remote management policy component configured to regulate remote access to the industrial asset from the cloud platform.

Also, a cloud-based remote access system is provided, comprising a remote asset server interface component configured to receive a security policy from a remote asset server via a cloud platform, wherein the security policy defines a permitted scope of remote access to an industrial asset; and a portal management component configured to generate a portal in the cloud platform based on the security policy, wherein the portal regulates remote access to the industrial asset in accordance with the permitted scope of remote access.

Moreover, a method for regulating access to an industrial asset is provided, comprising receiving, by device comprising at least one processor, security policy data that defines a remote access permission relative to an industrial device; sending, by the device, an instruction to a connectivity broker device to create a communication portal on a cloud platform, wherein the communication portal links a remote device to the industrial device via the cloud platform; receiving, by the device, a request from the remote device via the communication portal to at least one of read data from or write date to a memory area of the industrial device; and allowing the request in response to a determination that the request does not violate the remote access permission.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is an asset management system that provides customized remote access to an industrial asset to both an end user and an OEM.
FIG. 2 is a block diagram of an example remote asset server.
FIG. 3 illustrates a system for providing safe and secure remote access to one or more industrial assets.
FIG. 4 illustrates role-specific views and functions provided by an end user portal and an OEM portal.
FIG. 5 illustrates a general cloud-based architecture for performing collective analysis on multiple industrial machines at diverse locations using OEM portals.
FIG. 6 illustrates assignment of different role- and user-specific views for a collection of industrial assets using a remote access architecture.
FIG. 7 illustrates a cloud-based architecture that facilitates remote access to industrial assets by multiple types of users.
FIG. 8 illustrates a remote asset server capable of linking asset data with peripheral from a local peripheral device.
FIG. 9 is a flowchart of an example methodology for controlling access to an industrial asset using a remote asset server.
FIG. 10 is a flowchart of an example methodology for role-based regulation of access to an industrial asset using a remote asset server.
FIG. 11 is an example computing environment.
FIG. 12 is an example networking environment.

### DETAILED DESCRIPTION

Various aspects of this disclosure are now described with reference to the drawings, wherein like reference numerals are used to refer to like elements throughout. In the following description, for purposes of explanation, numerous specific details are set forth in order to provide a thorough understanding of one or more aspects. It should be understood, however, that certain aspects of this disclosure may be practiced without these specific details, or with other methods, components, materials, *etc.* In other instances, well-known structures and devices are shown in block diagram form to facilitate describing one or more aspects.

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, traditional computer languages, C, C++, C#, or other such programming structures. In general, industrial controllers read input data from sensors and metering devices that provide discrete and telemetric data regarding one or more states of the controlled system, and generate control outputs based on these inputs in accordance with the user-defined program.

In addition to industrial controllers and their associated I/O devices, some industrial automation systems may also include low-level control systems, such as vision systems, barcode marking systems, variable frequency drives, industrial robots, and the like which perform local control of portions of the industrial process, or which have their own localized control systems.

A given industrial enterprise can comprise many industrial devices, assets, and machines provided by different product vendors or original equipment manufacturers (OEMs). Both end users (*e.g.,* the owners of the industrial assets) and OEMs require the ability to remotely operate and maintain critical production assets in a safe, secure, timely, and cost-effective manner. However, from the OEM standpoint, deploying field service personnel to service a widely dispersed fleet of equipment across many customer sites can be costly, and often results in unacceptably long response times. Also, OEMs often experience difficulty gaining remote access to customer equipment installed at remote or inhospitable locations. OEMs and other equipment service entities would therefore benefit by bringing remote assets online, which would provide for remote equipment configuration, patch management, predictive maintenance, equipment optimization, *etc.*

End users would also benefit from making their industrial assets available for remote access by OEMs, since doing so facilitates faster responsiveness to maintenance or downtime issues. Remote access also allows software upgrades, patches, and firmware updates to be administered remotely, ensuring that the end user's assets are kept up-to-date.

However, despite these potential advantages, placing industrial assets online for remote access by OEMs or other service providers raises safety and security concerns with end users. In order to take advantage of the benefits made possible by allowing remote access to their industrial assets, remote asset management solutions must protect against unauthorized access to control routines or proprietary data (*e.g.,* production statistics, confidential recipe data, *etc.*)*.*

The remote asset management solution described herein addresses the above concerns, and provides additional benefits to be described in more detail below. While certain examples set forth in this disclosure will be described in connection with providing OEMs with remote access to end users' assets, it is to be appreciated that similar techniques can be used to grant access to other types of service providers, including but not limited to systems integrators, device vendors, third-party service providers, *etc.*

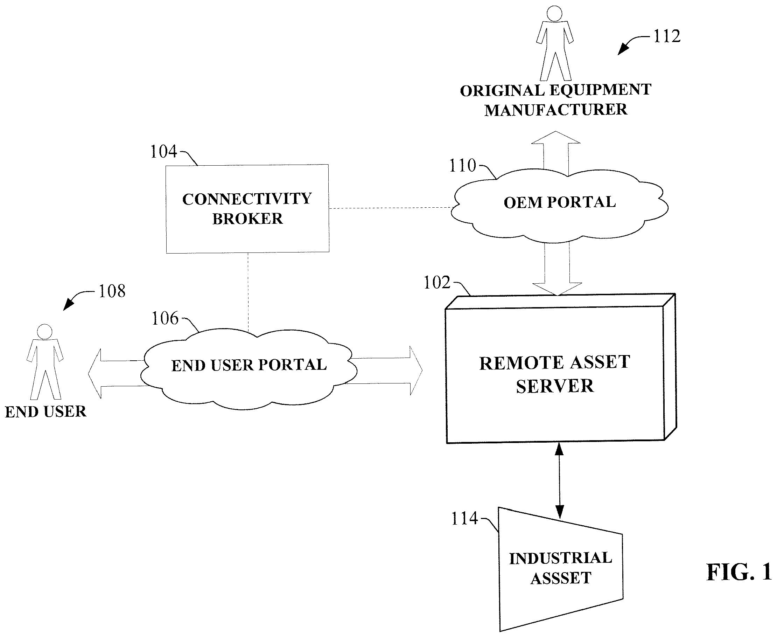

FIG. 1 illustrates an asset management solution that facilitates customized remote access to an industrial asset by both an end user and an OEM. The asset management solution comprises a remote asset server 102 communicatively coupled to a local industrial asset 114. Remote asset server 102 allows the industrial asset 114 to be monitored and managed securely and safely by an end user 108 and an OEM 112 from remote locations. Industrial asset 114 can comprise substantially any industrial device, collection of devices, or machine, including but not limited to an industrial controller, a motor drive (*e.g*., a variable frequency drive), a human-machine interface (HMI) terminal, a sensor, a meter, a control cabinet, a vision system, or other such asset. In one or more embodiments, remote asset server 102 can comprise a stand-alone server device or other appliance that is communicatively linked to industrial asset 114 (locally or over a network), a rack-mounted or panel-mounted device that shares a rack or control cabinet with industrial asset 114, a modular device that is physically attached and wired to industrial asset 114, or other suitable embodiment. Remote asset server 102 can also be embodied as a network architecture device, including but not limited to a network switch, a router, a firewall device, a cloud gateway device, or other such network device. Moreover, although FIG. 1 (and other examples described herein) depicts remote asset server 102 as a separate physical device that is communicatively coupled to industrial asset 114, some embodiments of remote asset server 102 may comprise an embedded component of industrial asset 114 (e.g., a set of software components executing on the industrial asset). In yet another embodiment, remote asset server 102 can comprise a portable device that can be carried by authorized personnel between assets within a plant facility, or across multiple plant sites.

End user 108 can remotely access remote asset server 102 via an end user portal 106. In one or more embodiments, end user portal 106 can be instantiated in a cloud architecture maintained and managed by a connectivity broker 104. Similarly, OEM 112 can remotely access remote asset server 102 through an OEM portal 110 instantiated in the cloud architecture. As will be described in more detail below, end user portal 106 and OEM portal 110 provide different views and access privileges to industrial asset 114 via remote asset server 102. By maintaining the cloud infrastructure used to instantiate end user portal 106 and OEM portal 110, connectivity broker 104 provides a secure data pipeline into the end-user's plant, and facilitates customized, role-specific access to the end user's industrial assets.

In general, remote asset server 102 serves as a specialized network infrastructure device that regulates access to industrial asset 114 by different entities (*e.g.,* plant personnel, OEMs, system integrators, *etc.*) in accordance with enterprise security policies defined by the end user. These defined security policies can be implemented in the cloud platform as role-specific portals (*e.g.,* end user portal 106 and OEM portal 110), which serve as secure connection pipelines to industrial asset 114 via remote asset server 102. Using remote asset server 102, together with the cloud-based infrastructure maintained by connectivity broker 104, an end user can define which aspects of industrial asset 114 are allowed to be remotely viewed, accessed, and/or modified by an OEM or other outside entity.

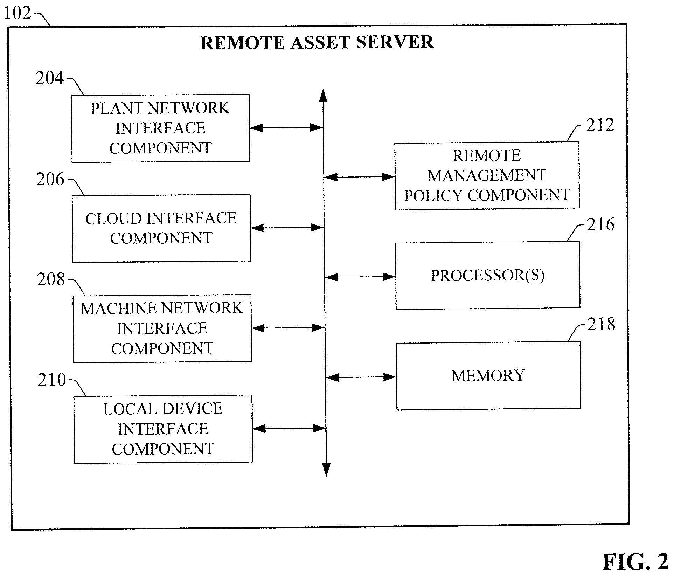

FIG. 2 is a block diagram of an exemplary remote asset server 102 according to one or more embodiments of this disclosure. Aspects of the systems, apparatuses, or processes explained in this disclosure can constitute machine-executable components embodied within machine(s), *e.g.,* embodied in one or more computer-readable mediums (or media) associated with one or more machines. Such components, when executed by one or more machines, *e.g.,* computer(s), computing device(s), automation device(s), virtual machine(s), *etc.,* can cause the machine(s) to perform the operations described.

Remote asset server 102 can include a plant network interface component 204, a cloud interface component 206, a machine network interface component 208, a local device interface component 210, a remote management policy component 212, one or more processors 216, and memory 218. In various embodiments, one or more of the plant network interface component 204, cloud interface component 206, machine network interface component 208, local device interface component 210, remote management policy component 212, the one or more processors 216, and memory 218 can be electrically and/or communicatively coupled to one another to perform one or more of the functions of the remote asset server 102. In some embodiments, components 204, 206, 208, 210, and 212 can comprise software instructions stored on memory 218 and executed by processor(s) 216. Remote asset server 202 may also interact with other hardware and/or software components not depicted in FIG. 2. For example, processor(s) 216 may interact with one or more external user interface devices, such as a keyboard, a mouse, a display monitor, a touchscreen, or other such interface devices.

Plant network interface component 204 can be configured to interface remote asset server 102 with a plant or enterprise network at the end user's facility (*e.g.,* the plant's office Ethernet network). Cloud interface component 206 can be configured to couple the remote asset server to a web-based or private cloud platform and exchange data with the cloud platform. This can include exchanging data with one or more end user portals and/or OEM portals instantiated in the cloud platform. Machine network interface component 208 can be configured to interface remote asset server 102 with a machine network (*e.g.,* an industrial or plant floor network) at the end user's facility. In an example embodiment, the machine network can comprise a common industrial protocol (CIP) network used to exchange data between industrial machines and assets on the plant floor.

Local device interface component 210 can be configured to interface remote asset server 102 with one or more local devices via a local communication protocol (*e.g.,* WiFi, USB, Bluetooth, *etc.*)*.* Local devices that can interface with remote asset server 102 via local device interface component 210 can include, but are not limited to, mobile client devices (*e.g.,* smart phones), handheld meters, portable devices running data analysis applications, authentication devices (*e.g.,* card readers, biometric readers, *etc.*)*,* video cameras, telemetry devices, or other such devices.

Remote management policy component 212 can be configured to generate remote management policy definitions in accordance with policy definition input provided by the end user and/or OEM. Remote management policy definitions can include both enterprise security policies defined by the end user and remote management functionality requested by the OEM and approved by the end user, as will be described in more detail below.

The one or more processors 216 can perform one or more of the functions described herein with reference to the systems and/or methods disclosed. Memory 218 can be a computer-readable storage medium storing computer-executable instructions and/or information for performing the functions described herein with reference to the systems and/or methods disclosed.

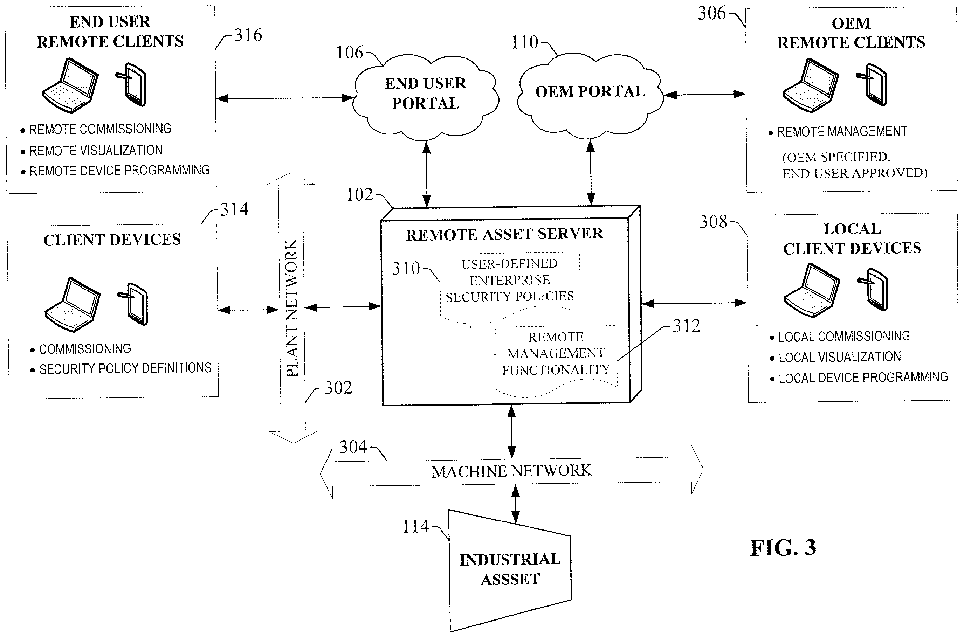

FIG. 3 illustrates a system for providing safe and secure remote access to one or more industrial assets. The following describes example techniques for commissioning remote asset server 102 for customized remote access to industrial asset 114. However, it is to be appreciated that any suitable techniques for commissioning remote asset server 102 are within the scope of one or more embodiments of this disclosure.

Remote asset server 102 can be configured and commissioned at the end user facility using one or more networked client devices 314 (*e.g.,* a desktop computer, laptop computer, tablet computer, smart phone, *etc.*)*.* To this end, remote asset server 102 can be placed on plant network 302 (*e.g.,* using plant network interface component 204) to facilitate access by networked client devices 314. Additionally or alternatively, remote asset server 102 can be configured and commissioned locally using one or more local client devices 308, which can interface with remote asset server 102 via local device interface component 210. Local client devices 308 can interface with remote asset server using any suitable wireless or hardwired local communication protocol, including but not limited to universal serial bus (USB), WiFi, Bluetooth, *etc.*

Once communication has been established between the networked (or local) client device and remote asset server 102, the end user can establish a functional association between remote asset server 102 and industrial asset 114. One or more embodiments of remote asset server 102 can support a plug-and-play type discovery sequence, whereby remote asset server 102 automatically detects industrial devices or assets connected thereto. In the example illustrated in FIG. 3, remote asset server 102 communicates with industrial asset 114 over machine network 304 (*e.g.,* a CIP network). However, in one or more embodiments, remote asset server 102 may be directly connected to industrial asset 114. In such embodiments, remote asset server 102 may be configured to mount directly to industrial asset 114 and interface with the asset over a dedicated communication port. Remote asset server 102 may also be a rack-mounted or panel-mounted device that shares a rack or control panel with industrial asset 114. In still another example, industrial asset 114 may be provided with pre-bundled, on-board remote asset server functionality.

In response to initiation of the discovery sequence, remote asset server 102 can identify industrial asset 114 and any data made available by the asset (*e.g.,* an asset identifier, device data tags, configuration parameters, status or health indicators, firmware version information, device programming, asset performance statistics, *etc.*)*.* Once remote asset server 102 has been configured to recognize industrial asset 114, the end user can define enterprise security policies 310 that govern remote access to industrial asset 114. As will be described in more detail below, remote asset server 102 allows the end user to define different access policies corresponding to different categories of authorized users (*e*.*g*., plant personnel, OEMs, device or machine vendors, *etc.*)*.* Once these enterprise security policies have been established, remote asset server 102 allows each authorized user to remotely access industrial asset 114 via cloud-based, role-specific portals (*e.g.,* end user portal 106 and OEM portal 110), which are configured in the cloud infrastructure based on the enterprise security policies 310 defined by the end user.

As noted above, remote asset server 102 includes a cloud interface component 206 that allows the server to interface with a web-based or private cloud platform and exchange data therewith. In one or more embodiments, the cloud platform can comprise a specialized cloud-based infrastructure maintained by connectivity broker 104 and designed to interact with remote asset servers to provide safe and secure connection pipelines to an end user's industrial assets. Cloud interface component 206 can be configured to access the cloud platform using any suitable connectivity method. For example, remote asset server 102 may be configured to access the cloud platform via the plant network 302 over the end user's Ethernet or WiFi network. In another example, remote asset server 102 may be configured to directly connect to the cloud platform via a cellular, satellite, or radio connection. In one or more embodiments, remote access server 102 can be configured to detect the most suitable available connectivity medium for accessing the cloud platform (e.g., detect presence of a cellular, satellite, or radio connection), and automatically connect to the cloud platform over the most suitable connection medium.

In one or more embodiments, the specialized cloud infrastructure is designed to leverage the enterprise security policies 310 defined by the end user to generate the cloud-based portals through which authorized users will remotely access industrial asset 114. For example, during commissioning of remote asset server 102, the end user may initially configure end user portal 106 by defining enterprise security policies 310 in remote asset server 102 (*e.g.,* using networked client devices 314 or local client devices 308). Enterprise security policies 310 can define, for example, which aspects of industrial asset 114 an end user may remotely view and/or modify via end user portal 106. This can include specifying which data tags of industrial asset 114 an end user may view or modify through end user portal 106, which configuration parameters may be remotely set via end user portal 106, which end user identities are to be granted remote access to industrial asset 114, *etc.* Once defined, remote asset server 102 can communicate enterprise security policies 310 to the cloud platform via cloud interface component 206. Based on these policies, the cloud infrastructure will configure end user portal 106, which serves as a managed remote connectivity pipeline to industrial asset 114 in accordance with the defined policies.

Although the present example depicts enterprise security policies 310 as being defined on remote asset server 102 using networked client devices 314, some embodiments may allow the security policies to be defined directly on the cloud platform. In such embodiments, an authorized user with administrator privileges may be provided with a web-based interface that allows the user to directly define one or more access portals directly on the cloud platform, and associate the portals with a given remote asset server 102.

Once established in the cloud platform, end user portal 106 can be accessed using any suitable end user remote client device 316, contingent on appropriate authorization of the user. For example, an end user remote client device 316 can access the cloud platform (*e.g.,* via a wired Internet or cellular connection) and invoke end user portal 106 in order to view and/or modify an aspect of industrial asset 114 (*e.g.,* view a health status of the industrial asset, modify a configuration parameter, *etc.*)*.* Upon receiving a request to access industrial asset 114 from an end user remote client device 316, end user portal 106 can authenticate the user of the client device using any suitable method (*e.g.,* password-based authentication, biometric authentication, hardware-based authentication, *etc.*) and provide access to industrial asset 114 upon successful authentication, where the degree of access to the asset accords to the enterprise security policies 310 defined during deployment.

End user portal 106 can be associated with a customized end user interface for remotely viewing, controlling, or configuring industrial asset 114. Accordingly, upon successful authentication, end user portal 106 can deliver the interface to the end user remote client device 316 to facilitate remote viewing, modification, configuration, and/or control of industrial asset 114. The interface provided by end user portal 106 represents a view of industrial asset 114 customized for an end user role. Thus, this connectivity infrastructure allows an end user to access, view, and modify data associated with industrial asset 114 from any location, subject to tightly controlled security parameters defined by security policies 310.

Remote asset server 102 can also be configured by the end user to allow controlled, regulated access to industrial asset 114 by an OEM. The OEM may be a manufacturer of industrial asset 114, and the end user may have a service agreement in place with the OEM to manage industrial asset 114 as needed. For example, the service agreement may require the OEM to correct operational failures, assist with asset configuration, perform firmware version management, implement software updates and patches, remotely monitor performance of the asset, *etc.* To provide the OEM with sufficient remote access privileges without exposing sensitive information or introducing safety risks, remote asset server 102 supports creation of an OEM portal 110 customized to the functional requirements of the OEM.

OEM portal 110 can be configured using a procedure similar to that used to configure end user portal 106, with additional features that allow OEM access privileges to be negotiated between the end user and the OEM. For example, during deployment, remote asset server 102 may perform a handshaking routine with the OEM over the cloud platform. During this stage of server configuration, the OEM can specify remote management functionality 312 needed to properly manage industrial asset 114. For example, the OEM may request access to particular data items (*e.g.,* data tags) or data areas in industrial asset 114, specify required read/write privileges for the identified data items, request permission to initiate a command or perform a maintenance action relative to the industrial device (e.g., reset the industrial asset, load new firmware on the industrial asset, etc.), or other requested functionality. Remote asset server 102 (or the cloud platform) requires the end user to approve the requested remote management functionality 312 before OEM portal 110 will be instantiated in the cloud platform and made available to the OEM. In this way, remote asset server 102, together with the cloud infrastructure maintained by connectivity broker 104, provides OEMs with tools for specifying how they wish to access industrial asset 114 in order to reliably manage their machine on behalf of the end user, while making such access subject to end user approval, affording the end user the ability to deny access to selected aspects of industrial asset 114 for reasons of safety, security, or business interests.

For example, during access negotiation, the OEM may request (via remote management functionality 312) unlimited write access to the industrial asset's configuration parameters. However, the user-defined enterprise security policies 310 may specify that certain control loop tuning parameters may only be modified locally, and therefore remote write access to these identified parameters must be denied for all users. Accordingly, remote asset server 102 may implement only such functionality requested by the OEM that does not conflict with the user-defined enterprise security policies 310, thus making remote management functionality 312 subservient to enterprise security policies 310. In another example, the OEM may request remote management functionality 312 that conflicts with one or more enterprise security policies 310; however, the end user may allow an exception to the policy for the OEM (*e.g.,* if the requested management functionality is preferably performed by the OEM and not by plant personnel).

Once remote management functionality 312 has been agreed upon between the OEM and end user, the cloud infrastructure can create and maintain OEM portal 110 based on the agreed upon management functions and access privileges. Authorized OEM remote client devices 306 can then remotely access industrial asset 114 via OEM portal 110, which enforces the access rights and restrictions defined by remote management functionality 312 and security policies 310. Like end user portal 106, OEM portal 110 can deliver a customized interface to authenticated OEM remote client devices 306, providing an OEM-specific view of industrial asset 114 that may be different than the view provided to plant personnel via end user portal 106.

As described in the foregoing examples, remote asset server 102 coordinates with the specialized cloud infrastructure to create and maintain secure, controlled remote access to industrial assets by various types of users. Connectivity broker 104 manages the cloud infrastructure that allows OEMs to remotely access the end user's equipment, thereby rendering the complexities of maintaining secure access pipelines substantially invisible to the end user. Moreover, the remote access architecture described herein can include multiple levels of security to ensure compliance with end user security policies. For example, in the event that an outside entity connected via OEM portal 110 attempts to bypass the end user's security policies and access a data area outside the allowed scope of access defined by remote management functionality 312, OEM portal 110 can trigger an alert to a specified end user client device informing of the unauthorized access attempt. The notification can include an identification of the particular OEM portal through which the security breach was attempted.

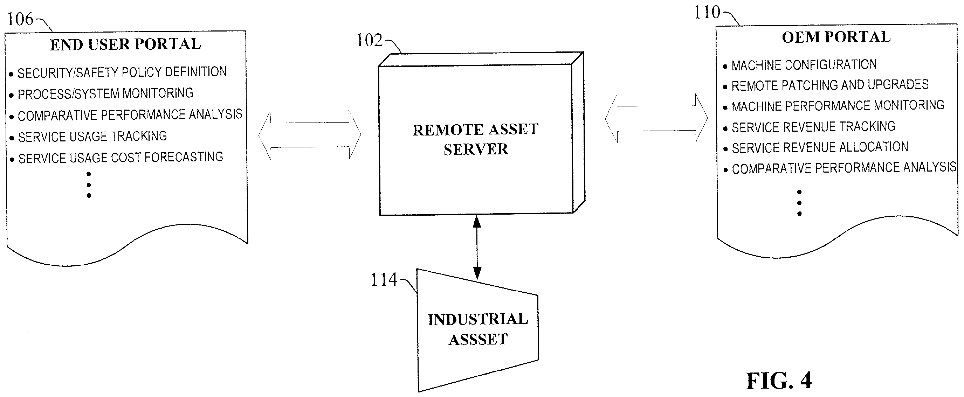

As illustrated in FIG. 4, end user portal 106 and OEM portal 110 can provide two or more distinct, role-specific views into the end user's equipment. The respective portals also provide distinct sets of functionality appropriate to the entity accessing the equipment, where the functionality made available to each entity is tightly controlled by the end user. In addition to the remote asset data monitoring and configurations aspects described above, the portals can also support a number of reporting, analytics, and administration tools. For example, end user portal 106 can allow authenticated end users (*e.g.,* plant personnel, owners of the industrial assets, *etc.*) to remotely define or modify the security policies 310 that govern access to the industrial asset 114. End users can also remotely submit approval of remote management functionality 312 requested by the OEM to facilitate configuration of OEM portal 110.

End user portal 106 can also allow an end user to remotely monitor a system or process relating to industrial asset 114. In addition to performance and configuration data, end user portal 106 can also monitor and collect information relating to the asset's location, health, safety status, product throughput/yield, energy consumption, power quality, environmental conditions, identification of plant personnel who interact with the asset, and other such information.

In some embodiments, end user portal 106 can also leverage cloud-based analytics services to perform comparative performance analysis on the industrial asset 114 relative to other monitored assets, or on larger systems that utilize industrial asset 114. End user portal 106 can also perform administrative functions relating to remote access by the OEM or other entities, including but not limited to tracking service usage. For example, end user portal 106 may have an associated administrative interface that graphically depicts an amount of data traffic between remote asset server 102 and the portals. The administrative interface can depict the data traffic using any suitable graphical representation, including but not limited to bar charts, heat maps that represent an amount of data traffic to each asset on the plant floor using gradient color-coding, speed-animated flow graphics whereby a flow speed graphic is used to represent an amount of data traffic to the asset, *etc.* Using this interface, the end user can identify sudden increases in remote access traffic to a particular asset, an origin of the data traffic (*e.g.,* which portal is being used to initiate the remote access, a login identity associated with the traffic, *etc.*)*,* and other relevant information. The administrative interface can also include administrative controls that allow an authorized end user to disable or block one or more portals from accessing the industrial asset. Since the administrative interface is accessible from any remote location via end user portal 106, the authorized end user can use these tools to remotely view and control access to the industrial asset at any time from any location.

In one or more embodiments, end user portal 106 can also forecast costs associated with remote access to the asset, which can be useful if the connectivity broker 104 charges the end user based on a volume of access traffic to and from the industrial asset 114.

An example OEM portal 110 can allow the OEM to remotely configure their industrial asset 114 or associated machine, and to remotely install software patches or upgrades. By providing OEMs the ability to perform these commissioning and maintenance functions remotely, OEM portal 110 facilitates faster OEM response times and obviates the need to dispatch OEM personnel to distant and potentially inhospitable end user equipment locations. The OEM can also remotely monitor performance of the industrial asset 114 via OEM portal 110.

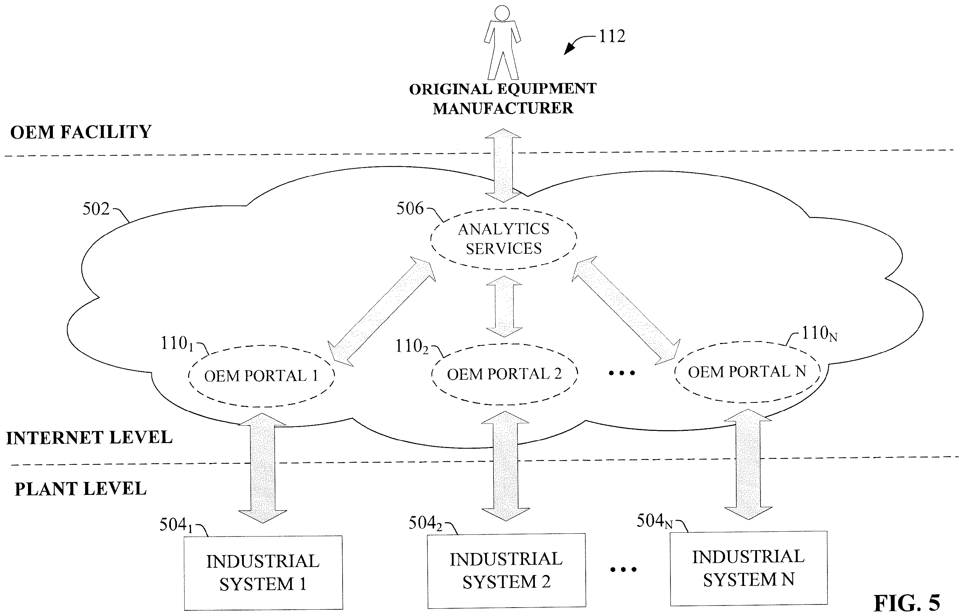

Moreover, since multiple OEM portals corresponding to different end user machines and/or facilities can be instantiated in a common cloud architecture (maintained by connectivity broker 104), the cloud architecture can support analytics and reporting tools that facilitate collective or comparative analysis of multiple machines at diverse locations. FIG. 5 illustrates a general cloud-based architecture for performing collective analysis on multiple industrial machines at diverse locations using the OEM portals described herein. As in previous examples, an OEM configures and maintains an OEM portal 110 in a specialized cloud infrastructure 502 (managed by connectivity broker 104) to facilitate remote commissioning, monitoring, and maintenance of one or more industrial assets of an end user's industrial system 504. The OEM portal 110 allows OEM 112 to access the industrial assets via one or more remote asset servers (*e.g.,* remote asset server 102), such that the scope of access afforded to the OEM is controlled and regulated by the end user as described above.

In the present example, OEM 112 has instantiated multiple OEM portals 110₁ - 110_{N} in cloud infrastructure 502 to facilitate access to industrial assets at multiple industrial systems 504₁ - 504_{N}. Industrial systems 504₁ - 504_{N} may comprise multiple systems within the same industrial facility (belonging to a single end user), systems at geographically diverse facilities of a common industrial enterprise, or systems belonging to different end users at geographically diverse locations. Using the architecture described herein, OEM 112 can invoke each OEM portal 110 individually from the remote OEM facility in order to access the respective industrial assets.

In addition, cloud infrastructure 502 can execute analytics services 506, which can be invoked by OEM 112 to perform collective or comparative analysis of the distributed industrial assets. For example, by collecting and collating data from the multiple industrial assets via OEM portals 110, analytics services 506 can generate comparative views of the industrial assets across multiple industrial systems 504 and end users. These views can convey relative performance statistics for the assets, comparisons of downtime occurrences or maintenance issues, identification of configuration parameters that differ between machines, *etc.* In some embodiments, analytics services 506 can identify a machine or industrial asset at a particular facility that performs notably better than similar assets at other facilities. In such scenarios, analytics services 506 may also identify one or more factors (*e.g.,* configuration parameters, operational context, *etc.*) that may account for the improved performance, providing the OEM with a statistical basis for recommending configuration or operational changes to other end users designed to improve performance of their industrial assets.

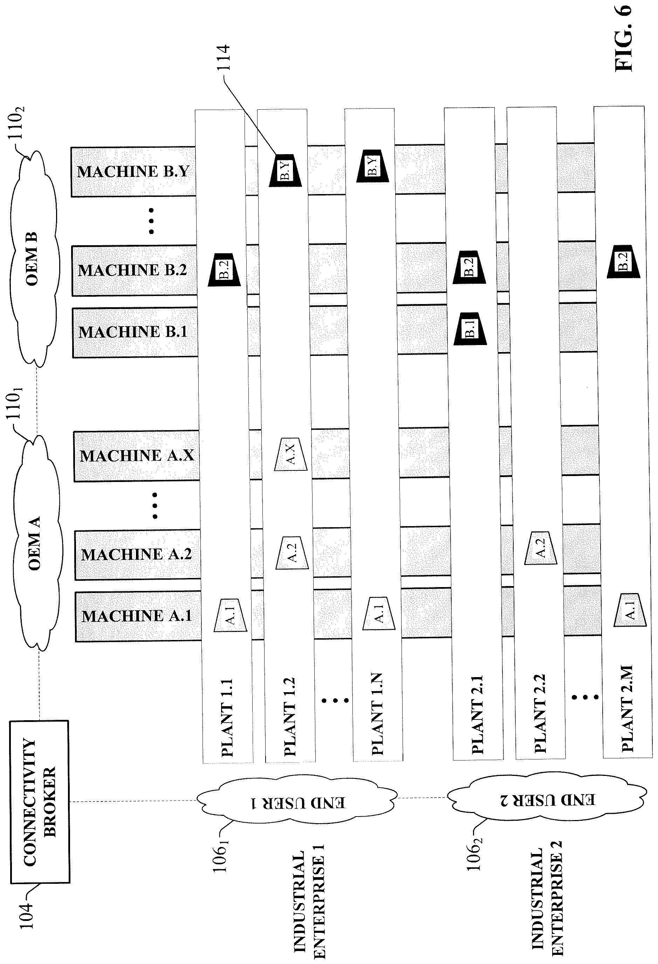

FIG. 6 illustrates assignment of different role- and user-specific views for a collection of industrial assets 114 using the subject remote access architecture. The illustrated example depicts two industrial enterprises (end users), each comprising multiple plant facilities. Industrial enterprise 1 comprises plants 1.1 - 1.N, and industrial enterprise 2 comprises plants 2.1 - 2.M. Each plant facility houses one or more industrial assets 114 provided by one or both of OEM A and OEM B. OEM A manufactures machines A.1 - A.X, while OEM B manufactures machines B.1 - B.Y. Thus, each OEM is responsible for multiple machine types, which are sold and distributed to multiple customers (Industrial enterprises 1 and 2) across many plant facilities (plants 1.1 - 1.N and 2.1 - 2.M).

As a result of this relationship between OEMs and end users, some plant facilities depicted in FIG. 6 comprise industrial assets 114 from both OEMs (*e.g.,* plants 1.1, 1.2, 1.N, and 2.M). Accordingly, end user portals 106 can be configured to provide a unified view of each end user's heterogeneous collection of industrial assets 114, including machines from both OEMs. As described above, these views can be accessed remotely by invoking the end user portals 106 from a cloud-capable end user client device. Using this architecture, an end user can track all assets comprising their industrial enterprise from a single cloud-based focus point.

Using the same cloud-based remote access architecture (managed by connectivity broker 104), OEM portals 110 can be configured to provide each OEM with a remotely accessible, unified view of their own fleet of machines across multiple customers (end users) and plant facilities. Moreover, by leveraging analytics services 506 described above in connection with FIG. 5, OEM portals 110 can perform collective and/or comparative analysis of each OEM's fleet of assets across the multiple plant facilities. For example, OEM A can utilize the cloud architecture's analytics services to perform comparative, cross-enterprise analysis on machine A.1, which has been deployed at plants 1.1 and 1.N (owned by end user 1) and plant 2.M (owned by end user 2). Such analysis can, for example, compare one or more performance metrics across the deployed instances of machine A.1 and identify machines that perform notably better or worse than a determined average for the metric. The analysis can further compare configuration settings, operational contexts, lifecycle data, or other relevant factors across the machines to identify one or more factors that may be a cause of the superior (or degraded) performance. Such analysis can provide OEM A with insight into the performance of their machines within different operational settings, which may otherwise be invisible. These insights can assist the OEM in providing troubleshooting guidance or configuration recommendations to users of their equipment. The OEM can also use this information to drive research and development of their equipment, identifying aspects of the machine class that merit further development or improvement.

In some embodiments, the cloud-based remote access system may also provide scheduling tools that allow each OEM to schedule periodic reviews of their equipment at each customer site. For example, as part of a service agreement with an end user, the OEM may be required to perform a monthly performance review of their machine installation at the end user facility. To this end, the OEM can access a scheduling service that runs on the cloud infrastructure, and configure automated reminders to review the end user's asset on a particular day of each month. The cloud-based remote access system can then generate and deliver automated notifications to specified client devices associated with the OEM at the appropriate times. In some embodiments, the end user may configure OEM portals 110 to only allow access to the industrial asset 114 during these pre-scheduled review periods, and to block access via the OEM portals at all other times. Based on these configured preferences, the remote access system will automatically enable and disable the OEM portals at the appropriate times to allow the OEM to perform their scheduled machine review.

In a related aspect, OEM portals 110 may also be configured to automatically enable access on an event-triggered basis. For example, if remote asset server 102 detects an abnormality with the industrial asset 114 (*e.g.,* based on detection of an alarm tag transition, a metric that exceeds a setpoint, *etc.*), the server can instruct the appropriate OEM portal 110 to transition from a disabled state to an enabled state, thereby allowing the OEM to remotely access the industrial asset 114 and perform remote troubleshooting. The cloud-based remote access system can also send an automated notification to pre-specified OEM client devices, alerting the OEM of the machine abnormality and indicating that the appropriate OEM portal has been enabled to allow remote access to the machine. In one or more embodiments, the cloud infrastructure may also allocate cloud-based storage for each end user for storage of troubleshooting documentation or other relevant information, including but not limited to electrical drawings, maintenance history, *etc.* These troubleshooting documents can be made available to the OEM during remote troubleshooting sessions.

In addition to analytics services 506 discussed above in connection with FIG. 5, various embodiments of cloud infrastructure 502 can support other types of cloud-based services that leverage the connection between industrial assets 114 and the cloud-based portals. For example, cloud infrastructure 502 may support a file upload and compare service, wherein a program or configuration file (*e.g.,* a controller program, motor drive configuration settings, *etc.*) installed on an end user's equipment is uploaded to the cloud platform by remote asset server 102 and compared with a standardized version of the program/configuration file known to achieve successful operation. Based on this comparison, the system can generate recommended programming or configuration changes for improving performance of the asset.

Similar file upload services can also be used to track changes made to the program or configuration file. For example, the program or configuration file may be uploaded periodically, according to a defined schedule, or in response to detected events (e.g., a detected abnormal condition or other system event, etc.). Cloud-based services can compare the most recently uploaded version of the program or configuration file with a previously uploaded version in order to determine whether changes have been made. The cloud services may be configured to deliver notifications to specified personnel in response to a determination that a change has been made to the program or device configuration. In some embodiments, notifications may be generated only if the detected modification is not pre-flagged as having received prior authorization. Based on results of the program upload and compare functions, the cloud services may also generate an audit trail that logs changes made to the program or device configuration. In an example embodiment, each entry in the change log could include such information as the nature of the modification, the time the modification was detected, a user identity associated with the modification, etc.

Some embodiments of cloud infrastructure 502 can also support disaster recovery services. Such services can periodically migrate program and configuration information from the end user's industrial assets to cloud-based storage. In the event of an equipment failure that results in loss of a device's programming or configuration profile, the most recently migrated program and configuration data can be retrieved from cloud storage and re-installed on the device.

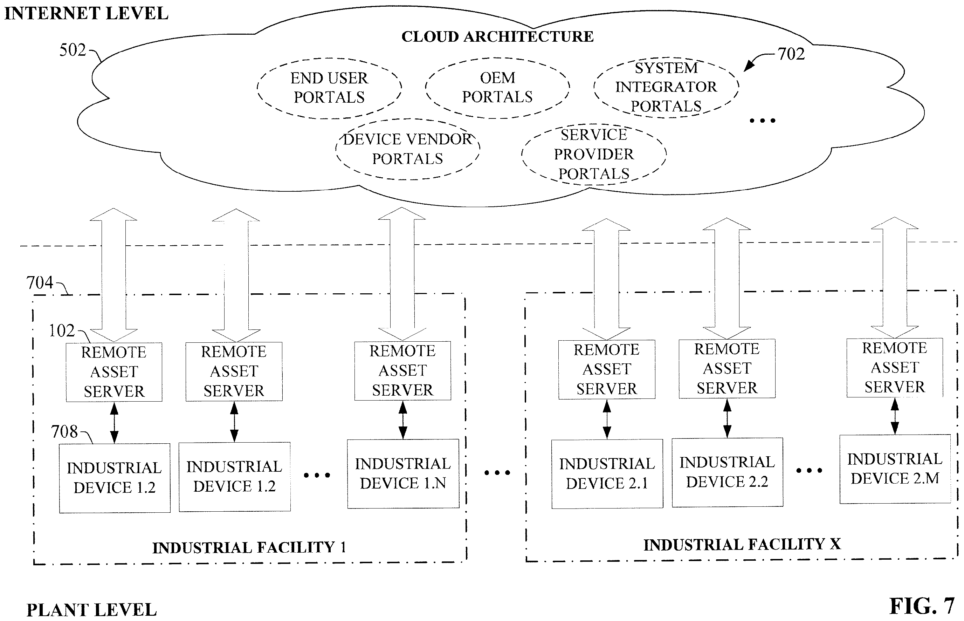

The foregoing examples describe the subject remote access architecture in terms of end user portals and OEM portals. However, one or more embodiments of the remote access architecture can support other portal configurations corresponding to other types of entities who may require access to an end user's industrial assets. FIG. 7 illustrates a cloud-based architecture that facilitates access by multiple types of users. In addition to the end user and OEM portals described in previous examples, cloud infrastructure 502 can also support creation of remote access portals 702 for system integrators, device vendors, service providers, or other entity types. Similar to OEM portals 110, the scope of remote access and functionality provided by these other non-end user portals is subject to approval by the end user. Functionality offered by these portals can be individually configured using the techniques described above to suit the particular needs of the entity requiring access to the industrial asset or machine.

For example, a system integrator may provide the end user with a control solution for a particular production line, comprising multiple industrial assets (*e.g.,* industrial controller, HMI, motor drives, *etc.*) from several different device vendors or OEMs. In order to effectively support the control system after start-up, the system integrator may require remote access to the diverse collection of industrial assets comprising the system. Accordingly, one or more remote asset servers 102 can be integrated with the industrial assets at the end user facility, and a system integrator portal can be configured in the cloud architecture to afford the system integrator remote access to the assets via the remote asset servers 102. The system integrator portal can be created using techniques similar to those used to create OEM portal 110. However, the scope of access provided by the system integrator portal may differ from OEM portal 110. For example, the system integrator portal can provide a comprehensive, unified view of multiple assets comprising a given control system, where the assets may include machines or devices from several different equipment manufacturers or vendors. By contrast, OEM portal 110 only allows access to machines or devices that were built by the particular OEM to whom the OEM portal is assigned. Similarly, device vendor portals, service provider portals, and other portal types can be suitably scoped based on the appropriate range of access required by each type of user. Thus, the remote access architecture described herein provides a unified platform that allows an end user to selectively assign remote access capabilities to outside partners and third-party entities according to the needs of each party.

Although FIG. 7 depicts an individual remote asset server 102 attached to each industrial device 708, some embodiments of remote asset server 102 can be configured to link multiple industrial devices 708 to cloud infrastructure 502 and portals 702.

Cloud infrastructure 502 can allow shared computing services to be accessed and utilized by cloud-capable devices. In one or more embodiments, cloud infrastructure 502 can be a public cloud accessible via the Internet by devices having Internet connectivity and appropriate authorizations to utilize the remote asset services described herein. In some scenarios, cloud infrastructure 502 can be provided by a cloud provider as a platform-as-a-service (PaaS), and the portals 702 and analytics services 506 can reside and execute on the cloud infrastructure 502 as cloud-based services. In some such configurations, access to the cloud infrastructure 502 and associated portals and services can be provided to customers as a subscription service by connectivity broker 104. Alternatively, cloud infrastructure 502 can be a private cloud operated internally by an industrial enterprise. An exemplary private cloud platform can comprise a set of servers hosting the remote access services and residing on a corporate network protected by a firewall.

Other cloud services supported by cloud infrastructure 502 can include, but are not limited to, data storage, data analysis, control applications (*e.g.,* applications that can generate and deliver control instructions to industrial devices 708 via remote asset servers 102, based on analysis of near real-time system data or other factors), remote monitoring and support, device management, asset performance management, predictive maintenance services, enterprise manufacturing intelligence services, supply chain performance management, notification services, or other such applications. If cloud infrastructure 502 is a web-based cloud, remote asset servers 102 at the respective industrial facilities 704 may interact with portals 702 via the Internet (*e.g.,* over the end user's Ethernet or WiFi network, or via cellular, satellite, or radio connections). Remote asset servers may also comprise an integrated component of a network infrastructure device, such as a firewall box, router, or switch.

Cloud-based storage offered by cloud infrastructure 502 can be easily scaled to accommodate the large quantities of data generated daily by an industrial enterprise. Moreover, multiple industrial facilities at different geographical locations can migrate their respective automation data to the cloud infrastructure 502 for aggregation, collation, collective big data analysis, and enterprise-level reporting without the need to establish a private network between the facilities. In one or more embodiments, remote asset servers 102 may support smart configuration capability, allowing the servers to automatically detect and communicate with the cloud infrastructure 502 upon installation at any facility, simplifying integration.

In one or more embodiments, end user preferences and configuration information relating to portal configurations, organization of collected asset data in the cloud platform, and other such preferences can be stored in a customer-specific manifest maintained by connectivity broker 104.

In one or more embodiments, connectivity broker 104 can manage certain higher-level connectivity features of the cloud infrastructure. For example, the cloud architecture can perform bandwidth metering for each portal or remote asset server on a user basis, such that remote access to a particular industrial asset is tracked individually for each vendor (*e.g.,* OEM, system integrator, service provider, etc.). This can allow costs associated with bandwidth usage to be distributed accordingly by the connectivity broker. The connectivity broker can also use this bandwidth tracking data to determine whether a particular vendor is using an excessive amount of bandwidth relative to other remote users, and take appropriate measures (*e.g.,* throttling throughput for the identified vendor to ensure fair distribution of bandwidth between vendors).

The cloud-based remote access architecture described herein can support a variety of auditing and accountability tools. For example, since remote access to the end user's industrial asset is achieved through entity-specific, cloud-based portals, the system can maintain detailed records documenting access to the asset, including times that the asset was remotely accessed, identification of the entities who accessed the asset (based on the portal used and a user identifier), records of modifications that were made to the asset during the remote access session, records of what data was viewed on the asset during the remote access session, and other relevant information. This information can be tracked and maintained automatically in the cloud infrastructure 502 or on the remote asset server 102. In the event of an asset failure or sudden performance degradation, these records can be examined to determine whether a recent remote modification of the asset was the cause of the failure, and to ascertain accountability for the fault.

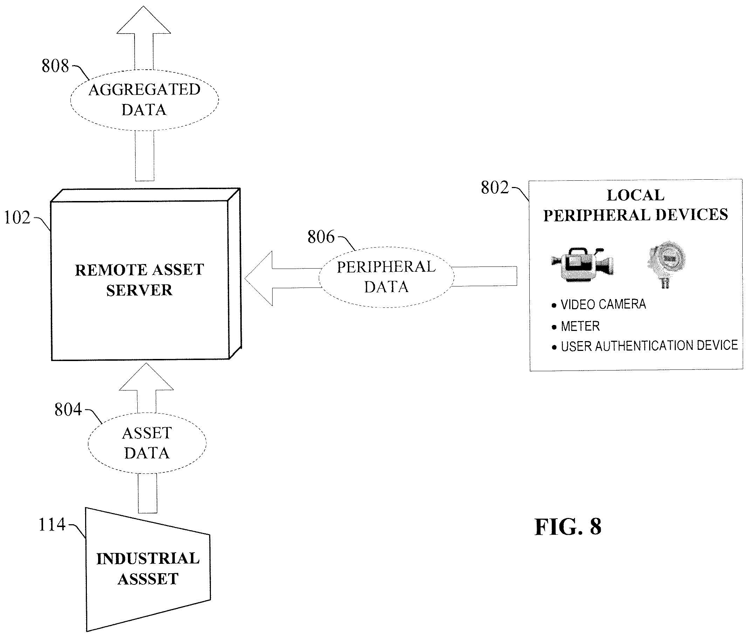

One or more embodiments of the remote asset server described herein can support additional data management features that provide an end user, OEM, or other entity with useful insights into machine operation. For example, FIG. 8 illustrates a remote asset server 102 capable of linking asset data with peripheral data from a local peripheral device. In this example, one or more local peripheral devices 802 can be connected to remote asset server 102 (*e.g.,* via the server's local device interface component 210). Example local peripheral devices 802 include video cameras set to record video footage of the industrial asset 114 during operation, a telemetry device that measures an aspect (*e.g.,* temperature, pressure, *etc.*) of a downstream process that depends on operation of the industrial asset 114, a user authentication device (*e.g.,* card reader, biometric device, barcode reader, *etc.*) that records an identifier associated with a current operator of industrial asset 114, or other such device.

Data generated by the local peripheral devices 802 is provided to remote asset server 102 via the local device interface component 210 while asset data 804 is collected from the industrial asset 114 (*e.g.,* via machine network interface component 208 or other suitable input port of the server). Remote asset server 102 can marry the peripheral data 806 to the asset data 804, and provide this bundled information as aggregated data 808 to the cloud platform for storage or remote viewing. In an example application, peripheral data 806 may comprise video data from a video camera that records video footage of the industrial asset 114 during operation. Remote asset server 102 links this video data to the asset data 804 continuously collected by the industrial asset, such that the video data is aligned chronologically with the asset data. Remote asset server 102 can timestamp the aggregated data 808 prior to migration to the cloud platform.

Recording this aggregated, time-stamped data in the cloud allows a viewer to correlate a subset of the asset data 804 indicating abnormal operation of the asset with corresponding video footage of the industrial asset 114, so that visual operation of the asset at the time the abnormal asset data was generated can be observed. In another example scenario, the video camera may be set to record surveillance footage for security or access control purposes. By correlating the video footage with asset data 804, a user can view who was near the asset at the time of a detected security or safety event indicated by the asset data.

In one or more embodiments, remote asset server 102 can also retrieve stored video data - either from the cloud platform or stored locally with the local video camera - and deliver the data to a local display associated with industrial asset 114. This may be, for example, an asset repair video that was previously recorded for instructional purposes. Remote asset server 102 can deliver the video to the local display in response to a request from a local service person to provide guidance in connection with maintenance or repair of the asset.

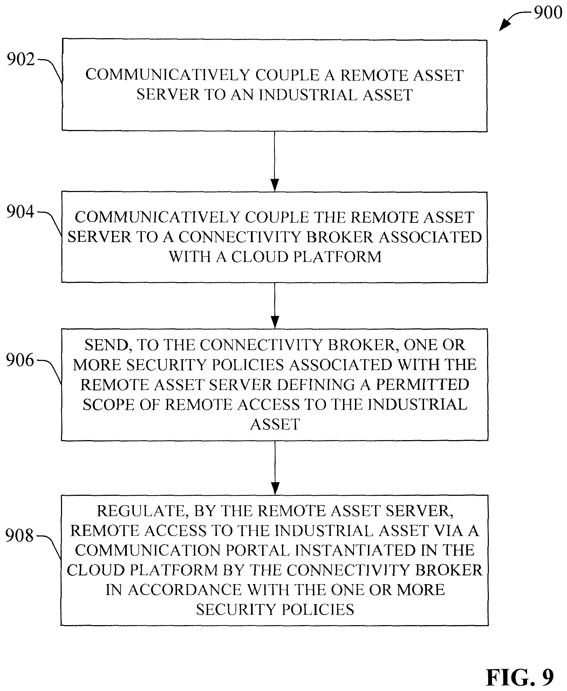

FIGs 9-10 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein

FIG. 9 illustrates an example methodology 900 for controlling access to an industrial asset using a remote asset server. Initially, at 902, a remote asset server is communicatively coupled to an industrial asset. In various embodiments, the remote asset server can comprise a stand-alone server device or other appliance that is communicatively linked to an industrial asset (locally or over a network), a rack-mounted or panel-mounted device that shares a rack or control cabinet with the industrial asset, a modular device that is physically attached and wired to the industrial asset, or other suitable embodiment. The remote asset server can also be embodied as a network architecture device, including but not limited to a network switch, a router, a firewall device, a cloud gateway device, or other such network device. In some embodiments, the remote asset server may comprise an embedded component of the industrial asset. The remote asset server may also be a portable device that can be carried by authorized personnel between industrial assets within a plant facility (or across multiple plant sites), where the portable device can communicatively connect to the industrial asset over a wireless link.

At 904, the remote asset server is communicatively coupled to a connectivity broker associated with a cloud platform. At 906, one or more security policies associated with the remote asset server are sent to the connectivity broker, where the security policies define a permitted scope of remote access to the industrial asset. These security policies can include both enterprise security policies defined by the owner of the industrial asset as well as remote management functionality requested by an outside entity (e.g., an OEM) and approved by the asset owner. The policies can define, for example, which data tags of the industrial asset may be remotely viewed or modified, which configuration parameters may be remotely set, which user identities or roles are to be granted remote access to the industrial asset, etc. At 908, remote access to the industrial asset is regulated by the remote asset server in accordance with the one or more security policies, where the remote access is facilitated by a communication portal instantiated in the cloud platform by the connectivity broker.

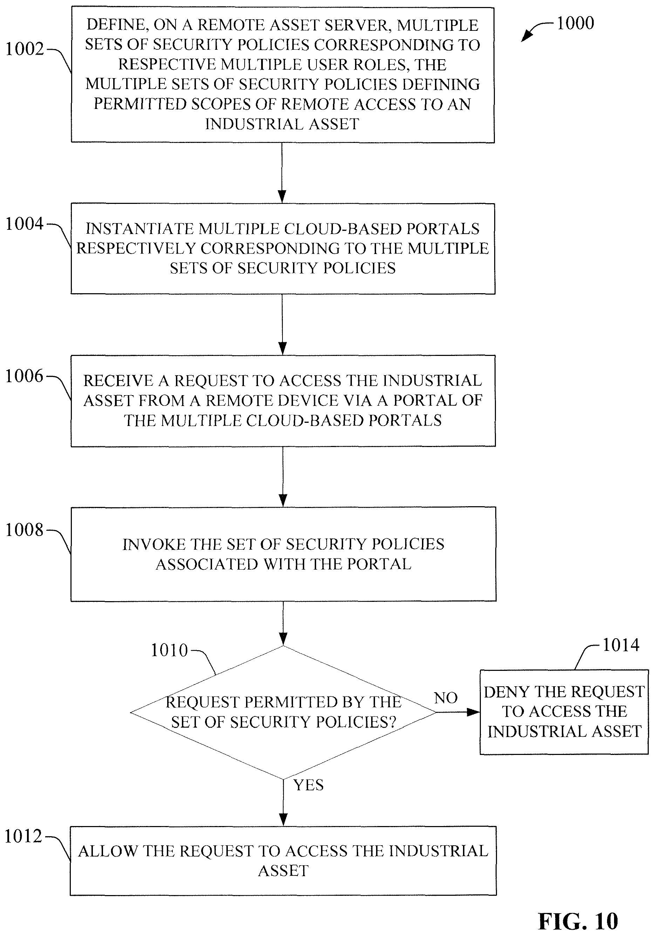

FIG. 10 illustrates an example methodology 1000 for role-based regulation of access to an industrial asset using a remote asset server. Initially, at 1002, multiple sets of security policies are defined on a remote asset server, where the multiple sets of security policies correspond to respective multiple user roles (e.g., asset owner, OEM, systems integrator, device vendor, service provider, etc.). The multiple sets of security policies define permitted scopes of remote access to the industrial asset. At 1004, multiple cloud-based portals are instantiated in a cloud platform, the portals respectively corresponding to the multiple sets of security policies. At 1006, a request to access the industrial asset is received from a remote device via one of the multiple cloud-based portals. At 1008, the set of security policies associated with the portal is invoked.

At 1010, a determination is made regarding whether the request is permitted by the set of security policies invoked at step 1008. For example, the request may comprise a request for remote read and/or write privileges to a particular configuration parameter of the industrial asset, which may be either expressly permitted or denied by the set of security policies. If it is determined at step 1010 that the request is not permitted by the set of security policies, the methodology moves to step 1014, and the request to access the industrial asset is denied. Alternatively, if it is determined at step 1010 that the request is permitted, the methodology moves to step 1012, where the request to access the industrial asset is allowed.

Embodiments, systems, and components described herein, as well as industrial control systems and industrial automation environments in which various aspects set forth in the subject specification can be carried out, can include computer or network components such as servers, clients, programmable logic controllers (PLCs), programmable controllers, automation controllers, programmable automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the terms PLC, industrial controller, automation controller, or programmable automation controller as used herein can include functionality that can be shared across multiple components, systems, and/or networks. As an example, one or more PLCs can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC can also communicate to and control various other devices such as I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and EtherNet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

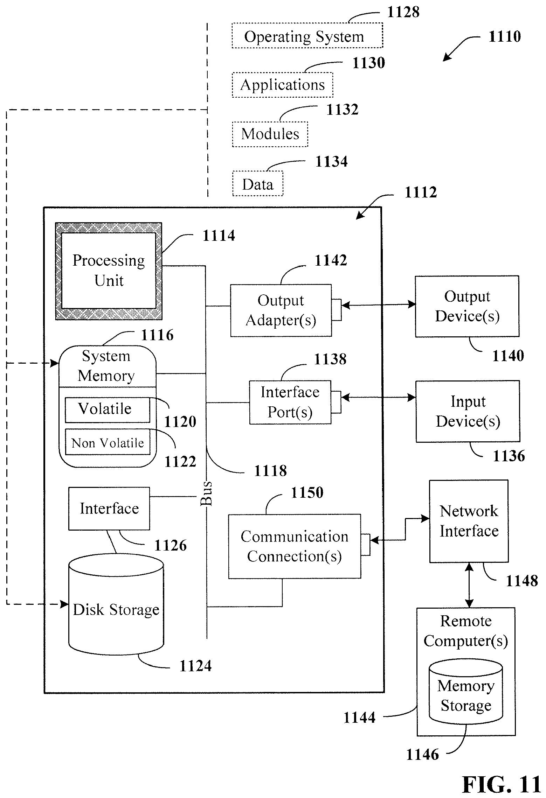

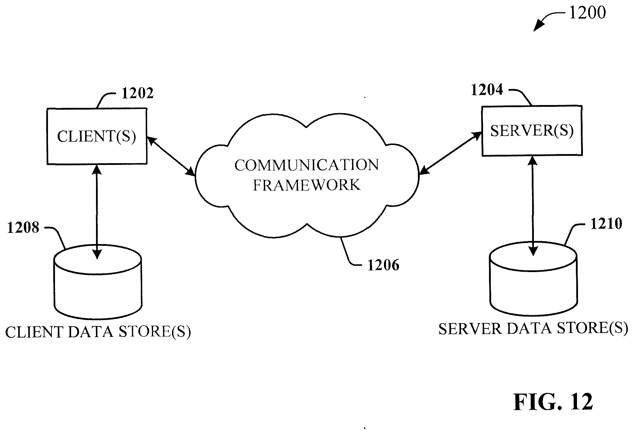

In order to provide a context for the various aspects of the disclosed subject matter, FIGs. 11 and 12 as well as the following discussion are intended to provide a brief, general description of a suitable environment in which the various aspects of the disclosed subject matter may be implemented.

With reference to FIG. 11, an example environment 1110 for implementing various aspects of the aforementioned subject matter includes a computer 1112. The computer 1112 includes a processing unit 1114, a system memory 1116, and a system bus 1118. The system bus 1118 couples system components including, but not limited to, the system memory 1116 to the processing unit 1114. The processing unit 1114 can be any of various available processors. Dual microprocessors and other multiprocessor architectures also can be employed as the processing unit 1114.

The system bus 1118 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1116 includes volatile memory 1120 and nonvolatile memory 1122. The basic input/output system (BIOS), containing the basic routines to transfer information between elements within the computer 1112, such as during start-up, is stored in nonvolatile memory 1122. By way of illustration, and not limitation, nonvolatile memory 1122 can include read only memory (ROM), programmable ROM (PROM), electrically programmable ROM (EPROM), electrically erasable PROM (EEPROM), or flash memory. Volatile memory 1120 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1112 also includes removable/non-removable, volatile/nonvolatile computer storage media. FIG. 11 illustrates, for example a disk storage 1124. Disk storage 1124 includes, but is not limited to, devices like a magnetic disk drive, floppy disk drive, tape drive, Jaz drive, Zip drive, LS-100 drive, flash memory card, or memory stick. In addition, disk storage 1124 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1124 to the system bus 1118, a removable or non-removable interface is typically used such as interface 1126.

It is to be appreciated that FIG. 11 describes software that acts as an intermediary between users and the basic computer resources described in suitable operating environment 1110. Such software includes an operating system 1128. Operating system 1128, which can be stored on disk storage 1124, or system memory 116, acts to control and allocate resources of the computer 1112. System applications 1130 take advantage of the management of resources by operating system 1128 through program modules 1132 and program data 1134 stored either in system memory 1116 or on disk storage 1124. It is to be appreciated that one or more embodiments of the subject disclosure can be implemented with various operating systems or combinations of operating systems.

A user enters commands or information into the computer 1112 through input device(s) 1136. Input devices 1136 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1114 through the system bus 1118 *via* interface port(s) 1138. Interface port(s) 1138 include, for example, a serial port, a parallel port, a game port, and a universal serial bus (USB). Output device(s) 1140 use some of the same type of ports as input device(s) 1136. Thus, for example, a USB port may be used to provide input to computer 1112, and to output information from computer 1112 to an output device 1140. Output adapters 1142 are provided to illustrate that there are some output devices 1140 like monitors, speakers, and printers, among other output devices 1140, which require special adapters. The output adapters 1142 include, by way of illustration and not limitation, video and sound cards that provide a means of connection between the output device 1140 and the system bus 1118. It should be noted that other devices and/or systems of devices provide both input and output capabilities such as remote computer(s) 1144.

Computer 1112 can operate in a networked environment using logical connections to one or more remote computers, such as remote computer(s) 1144. The remote computer(s) 1144 can be a personal computer, a server, a router, a network PC, a workstation, a microprocessor based appliance, a peer device or other common network node and the like, and typically includes many or all of the elements described relative to computer 1112. For purposes of brevity, only a memory storage device 1146 is illustrated with remote computer(s) 1144. Remote computer(s) 1144 is logically connected to computer 1112 through a network interface 1148 and then physically connected *via* communication connection 1150. Network interface 1148 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1150 refers to the hardware/software employed to connect the network interface 1148 to the bus 1118. While communication connection 1150 is shown for illustrative clarity inside computer 1112, it can also be external to computer 1112. The hardware/software necessary for connection to the network interface 1148 includes, for exemplary purposes only, internal and external technologies such as, modems including regular telephone grade modems, cable modems and DSL modems, ISDN adapters, and Ethernet cards.

FIG. 12 is a schematic block diagram of a sample-computing environment 1200 with which the disclosed subject matter can interact. The sample-computing environment 1200 includes one or more client(s) 1202. The client(s) 1202 can be hardware and/or software (*e.g.,* threads, processes, computing devices). The sample-computing environment 1200 also includes one or more server(s) 1204. The server(s) 1204 can also be hardware and/or software (*e.g.,* threads, processes, computing devices). The servers 1204 can house threads to perform transformations by employing one or more embodiments as described herein, for example. One possible communication between a client 1202 and servers 1204 can be in the form of a data packet adapted to be transmitted between two or more computer processes. The sample-computing environment 1200 includes a communication framework 1206 that can be employed to facilitate communications between the client(s) 1202 and the server(s) 1204. The client(s) 1202 are operably connected to one or more client data store(s) 1208 that can be employed to store information local to the client(s) 1202. Similarly, the server(s) 1204 are operably connected to one or more server data store(s) 1210 that can be employed to store information local to the servers 1204.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g.,* a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g.,* hard disk, floppy disk, magnetic strips...), optical disks [*e.g.,* compact disk (CD), digital versatile disk (DVD)...], smart cards, and flash memory devices (*e*.*g*., card, stick, key drive...).

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (*e.g.,* screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (*e.g.,* data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts: the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; *e.g.,* the set with no elements therein. Thus, a "set" in the subject disclosure includes one or more elements or entities. As an illustration, a set of controllers includes one or more controllers; a set of data resources includes one or more data resources; *etc.* Likewise, the term "group" as utilized herein refers to a collection of one or more entities; *e.g.,* a group of nodes refers to one or more nodes.

Various aspects or features will be presented in terms of systems that may include a number of devices, components, modules, and the like. It is to be understood and appreciated that the various systems may include additional devices, components, modules, *etc.* and/or may not include all of the devices, components, modules *etc.* discussed in connection with the figures. A combination of these approaches also can be used.

## Claims

1. A remote asset server (102), comprising:
a cloud interface component (206) configured to communicatively couple the remote asset server to a cloud platform, wherein the cloud interface component (206) is further configured to send an instruction to a connectivity broker which maintains the cloud platform to instantiate cloud-based portals based on one or more security policies and wherein the cloud-based portals comprise at least
an end user portal (106), allowing owners of the industrial asset to remotely define or modify the security policies that govern access to an industrial asset (114), and
an original equipment manufacturer, OEM, portal (110), allowing the OEM which may be a manufacturer of the industrial asset, to remotely configure the industrial asset;
an asset interface component configured to communicatively couple the remote asset server to the industrial asset (114), wherein the industrial asset comprises any industrial device, collection of devices, or machine, including but not limited to an industrial controller, a motor drive, a human machine interface, HMI, terminal, a sensor, a meter, a control cabinet or a vision system; and
a remote management policy component (212) configured to regulate remote access to the industrial asset from the cloud platform, wherein the remote management policy component (212) is further configured to receive configuration input specifying the one or more security policies defining a permitted scope of remote access to the industrial asset (114); and
wherein the connectivity broker device (104) is communicatively coupled to the remote asset server and provides secure data pipelines to the industrial asset via the remote asset server.

2. The remote asset server (102) of claim 1, wherein the one or more security policies comprise multiple sets of security policies corresponding to respective multiple entities.

3. The remote asset server (102) of claim 2, wherein the multiple entities comprise at least one of an end user (108), an original equipment manufacturer (112), a system integrator, a device vendor, a service provider, or a technical support entity.

4. The remote asset server (102) of claim 1, wherein the one or more security policies define at least one of a set of data items allowed to be viewed or modified via the cloud-based portal, which of the set of data items are allowed to be remotely modified via the cloud-based portal, or scheduled times during which the cloud-based portal is permitted to access the industrial asset (114).

5. The remote asset server (102) of claim 1, wherein the remote management policy component (212) is further configured to receive a request for remote management functionality from an entity, and implement the remote management functionality as a security policy in response to receiving approval input.

6. The remote asset server (102) of any one of claims 1 to 5, further comprising a local device interface component configured to receive peripheral data from a peripheral device and associate the peripheral data with asset data collected from the industrial asset (114) via the asset interface component.

7. The remote asset server (102) of claim 6, further comprising a time synchronization component configured to time stamp the peripheral data and the asset data to facilitate synchronization of the peripheral data and the asset data; and/or
wherein the peripheral data comprises video data received from a video camera.

8. A method for regulating access to an industrial asset (114), wherein the industrial asset comprises any industrial device, collection of devices, or machine, including but not limited to an industrial controller, a motor drive, a human machine interface, HMI, terminal, a sensor, a meter, a control cabinet or a vision system, the method comprising:
receiving, by a device comprising at least one processor, security policy data that defines a remote access permission relative to an industrial asset;
sending, by the device, an instruction to a connectivity broker device (104) to create communication portals on a cloud platform, wherein the communication portals link a remote device to the industrial asset via the cloud platform, by providing secure data pipelines to the industrial asset via a remote asset server (102), wherein the communication portals comprise at least
an end user portal (106), allowing owners of the industrial asset to remotely define or modify the security policy data that govern access to an industrial asset (114), and
an original equipment manufacturer, OEM, portal (110), allowing the OEM which may be a manufacturer of the industrial asset, to remotely configure the industrial asset;
receiving, by the device, a request from the remote device via the communication portals to at least one of read data from or write data to a memory area of the industrial asset; and
allowing the request in response to a determination that the request does not violate the remote access permission.

9. The method of claim 8, wherein
the receiving the security policy data comprises receiving multiple sets of security policy data respectively corresponding to multiple user roles, and
the sending comprises sending multiple instructions to create respective multiple communication portals corresponding to the multiple user roles; or
wherein the receiving the security policy data comprises receiving a definition of at least one of a set of data items allowed to be viewed or modified via the communication portal, which of the set of data items are allowed to be remotely modified via the communication portal, or scheduled times during which the communication portal is permitted to access the industrial device.

## Patentansprüche

1. Ressourcen-Fern-Server (120), mit:
einer Cloud-Schnittstellenkomponente (206), die ausgebildet ist, den Ressourcen-Fern-Server kommunizierend mit einer Cloud-Plattform zu verbinden, wobei die Cloud-Schnittstellenkomponente (206) ferner ausgebildet ist, einen Befehl zu einer Verbindungsvermittlungseinrichtung zu senden, die die Cloud-Plattform unterhält, um Cloud-basierte Portale auf der Grundlage einer oder mehrerer Sicherheitsregeln zu instanziieren, und wobei die Cloud-basierten Portale umfassen
ein Endbenutzerportal (106), das es Besitzern der industriellen Ressource ermöglicht, die Sicherheitsregeln, die den Zugriff auf eine industrielle Ressource (114) regeln, im Fernzugriff zu definieren oder zu modifizieren, und/oder
ein Originalanlagenhersteller-, OEM-, Portal (110), das es dem OEM ermöglicht, der ein Hersteller der industriellen Ressource ist, die industrielle Ressource im Fernzugriff zu konfigurieren;
einer Ressourcenschnittstellenkomponente, die ausgebildet ist, den Ressourcen-Fern-Server kommunizierend mit der industriellen Ressource (114) zu verbinden, wobei die industrielle Ressource eine beliebige industrielle Einrichtung, eine Ansammlung aus Einrichtungen, eine Maschine, einschließlich, ohne darauf zu beschränken, einer industriellen Steuerung, einer Motorsteuerung, einem Mensch-Maschinen-Schnittstellen-, HMI-, Endgerät, einem Sensor, einem Messgerät, einer Steuertafel oder einem Visualisierungssystem, umfasst; und
einer Fernverwaltungsregelkomponente (212), die ausgebildet ist, einen Fernzugriff auf die industrielle Ressource aus der Cloud-Plattform zu regeln, wobei die Fernverwaltungsregelkomponente (212) ferner ausgebildet ist, Konfigurationseingaben zu empfangen, die die eine oder die mehreren Sicherheitsregeln spezifizieren, die einen zulässigen Bereich für einen Fernzugriff auf die industrielle Ressource (114) festlegen; und
wobei die Verbindungsvermittlungseinrichtung (104) kommunizierend mit dem Ressourcen-Fern-Server verbunden ist und Sicherheitsdaten-Pipelines für die industrielle Ressource über den Ressourcen-Fern-Server bereitstellt.

2. Ressourcen-Fern-Server (102) nach Anspruch 1, wobei die eine oder die mehreren Sicherheitsregeln mehrere Gruppen aus Sicherheitsregeln umfassen, die jeweiligen mehreren Einheiten entsprechen.

3. Ressourcen-Fern-Server (102) nach Anspruch 2, wobei die mehreren Einheiten einen Endbenutzer (108) und/oder einen Originalanlagenhersteller (112) und/oder einen Systemintegrator und/oder einen Gerätevertreiber und/oder einen Dienstanbieter und/oder eine Einheit für technische Hilfe umfassen.

4. Ressourcen-Fern-Server (102) nach Anspruch 1, wobei die eine oder die mehreren Sicherheitsregeln umfassen: eine Gruppe aus Datenelementen, die über das Cloud-basierte Portal betrachtbar oder modifizierbar sind, und/oder welche der Gruppen aus Datenelementen über das Cloud-basierte Portal Entferntzugriff modifizierbar sind und/oder geplante Zeiten, während welchen das Cloud-basierte Portal Zugriff auf die industrielle Ressource (114) haben darf.

5. Ressourcen-Fern-Server (102) nach Anspruch 1, wobei die Fernverwaltungsregelkomponente (212) ferner ausgebildet ist, eine Anfrage bezüglich einer Fernverwaltungsfunktion aus einer Einheit zu empfangen und die Fernverwaltungsfunktion als eine Sicherheitsregel in Reaktion auf das Empfangen einer Zustimmungseingabe zu implementieren.

6. Ressourcen-Fern-Server (102) nach einem der Ansprüche 1 bis 5, der ferner eine Schnittstellenkomponente für eine lokale Einrichtung aufweist, die ausgebildet ist, periphere Daten aus einem peripheren Gerät zu empfangen und die peripheren Daten Ressourcendaten zuzuordnen, die aus der industriellen Ressource (114) über die Ressourcenschnittstellenkomponente gesammelt werden.

7. Ressourcen-Fern-Server (102) nach Anspruch 6, der ferner eine Zeitsynchronisierkomponente aufweist, die ausgebildet ist, die peripheren Daten und die Ressourcendaten mit einem Zeitstempel zu versehen, um eine Synchronisierung der peripheren Daten und der Ressourcendaten zu ermöglichen; und/oder
wobei die peripheren Daten Videodaten umfassen, die aus einer Videokamera erhalten werden.

8. Verfahren zur Regelung des Zugriffs auf eine industrielle Ressource (114), wobei die industrielle Ressource eine beliebige industrielle Einrichtung, eine Ansammlung aus Einrichtungen oder eine Maschine einschließlich, ohne Beschränkung, einer industriellen Steuerung, einer Motorsteuerung, einem Mensch-Maschine-Schnittstellen-, HMI-, Endgerät, einem Sensor, einem Messgerät, einer Steuertafel oder einem Visualisierungssystem, umfasst, wobei das Verfahren aufweist:
Empfangen, durch eine Einrichtung mit mindestens einem Prozessor, von Sicherheitsregeldaten, die eine Fernzugriffserlaubnis bezüglich einer industriellen Ressource festlegen;
Senden, durch die Einrichtung, eines Befehls zu einer Verbindungsvermittlungseinrichtung (104), um Kommunikationsportale in einer Cloud-Plattform zu erzeugen, wobei die Kommunikationsportale eine entfernte Einrichtung mit der industriellen Ressource über die Cloud-Plattform verbinden, indem Sicherheitsdaten-Pipelines zu der industriellen Ressource über einen Ressourcen-Fern-Server (102) bereitgestellt werden, wobei die Kommunikationsportale aufweisen
ein Endbenutzerportal (106), das es Besitzern der industriellen Ressource ermöglicht, die Sicherheitsregeldaten, die den Zugriff auf eine industrielle Ressource (114) regeln, im Fernzugriff zu definieren oder zu modifizieren, und/oder
ein Originalanlagenhersteller-, OEM-, Portal (110), das es dem OEM, der der Hersteller der industriellen Ressource sein kann, ermöglicht, die industrielle Ressource im Fernzugriff zu konfigurieren;
Empfangen, durch die Einrichtung, einer Anfrage bezüglich der entfernten Einrichtung über die Kommunikationsportale, um Daten aus einem Speicherbereich der industriellen Ressource auszulesen und/oder Daten in den Speicherbereich zu schreiben; und
Zulassen der Anfrage in Reaktion darauf, dass bestimmt wird, dass die Anfrage die Fernzugriffserlaubnis nicht verletzt.

9. Verfahren nach Anspruch 8, wobei
das Empfangen der Sicherheitsregeldaten umfasst: Empfangen mehrerer Gruppen aus Sicherheitsregeldaten, die entsprechend mehreren Benutzerrollen zugeordnet sind, und das Senden umfasst: Senden mehrerer Befehle zur Erzeugung entsprechender mehrerer Kommunikationsportale, die den mehreren Benutzerrollen zugeordnet sind; oder
wobei das Empfangen der Sicherheitsregeldaten umfasst: Empfangen einer Definition einer Gruppe aus Datenelementen, die über das Kommunikationsportal betrachtbar oder modifizierbar sind, und/oder welche der Gruppen aus Datenelementen durch Fernzugriff über das Kommunikationsportal modifizierbar sind, und/oder geplante Zeiten, während welchen das Kommunikationsportal Zugriff auf die industrielle Einrichtung haben darf.

## Revendications

1. Serveur de ressource à distance (102), comprenant :
un composant d'interface cloud (206) configuré pour coupler en communication le serveur de ressource à distance à une plate-forme cloud, le composant d'interface cloud (206) étant en outre configuré pour envoyer une instruction à un intermédiaire de connectivité qui maintient la plate-forme cloud pour instancier des portails basés sur un cloud sur la base d'une ou plusieurs politiques de sécurité et dans lequel les portails basés sur un cloud comprennent au moins
un portail d'utilisateur final (106), permettant à des propriétaires de la ressource industrielle de définir ou de modifier à distance les politiques de sécurité qui régissent l'accès à une ressource industrielle (114), et un portail (110) de fabricant d'équipement d'origine, OEM, permettant à l'OEM, qui peut être un fabricant de la ressource industrielle, de configurer à distance la ressource industrielle ;
un composant d'interface de ressource configuré pour coupler en communication le serveur de ressource à distance à la ressource industrielle (114), la ressource industrielle comprenant tout dispositif industriel, gamme de dispositifs, ou une machine, incluant, mais sans s'y limiter, un dispositif de commande industriel, un entraînement moteur, un terminal interface homme-machine, IHM, un capteur, un instrument de mesure, une armoire de commande ou un système de vision ; et
un composant de politique de gestion à distance (212) configuré pour réguler un accès à distance à la ressource industrielle à partir de la plate-forme cloud, le composant de politique de gestion à distance (212) étant en outre configuré pour recevoir une entrée de configuration spécifiant les une ou plusieurs politiques de sécurité définissant une étendue autorisée d'accès à distance à la ressource industrielle (114) ; et
dans lequel le dispositif intermédiaire de connectivité (104) est couplé en communication au serveur de ressource à distance et fournit des pipelines de données sécurisés à la ressource industrielle via le serveur de ressource à distance.

2. Serveur de ressource à distance (102) selon la revendication 1, dans lequel les une ou plusieurs politiques de sécurité comprennent de multiples ensembles de politiques de sécurité correspondant à de multiples entités respectives.

3. Serveur de ressource à distance (102) selon la revendication 2, dans lequel les multiples entités comprennent au moins l'un parmi un utilisateur final (108), un fabricant d'équipement d'origine (112), un intégrateur de système, un vendeur de dispositifs, un fournisseur de services, ou une entité de support technique.

4. Serveur de ressource à distance (102) selon la revendication 1, dans lequel les une ou plusieurs politiques de sécurité définissent au moins un ensemble d'éléments de données autorisés à être visualisés ou modifiés via le portail basé sur un cloud, lequel ensemble d'éléments de données est autorisé à être modifiés à distance via le portail basé sur un cloud, ou à des heures planifiées pendant lesquelles le portail basé sur un cloud est autorisé à accéder à la ressource industrielle (114).

5. Serveur de ressource à distance (102) selon la revendication 1, dans lequel le composant de politique de gestion à distance (212) est en outre configuré pour recevoir une demande de fonctionnalité de gestion à distance provenant d'une entité, et implémenter la fonctionnalité de gestion à distance en tant que politique de sécurité en réponse à la réception d'une entrée d'approbation.

6. Serveur de ressource à distance (102) selon l'une quelconque des revendications 1 à 5, comprenant en outre un composant d'interface de dispositif local configuré pour recevoir des données périphériques provenant d'un dispositif périphérique et associer les données périphériques à des données de ressource collectées auprès de la ressource industrielle (114) via le composant d'interface de ressource.

7. Serveur de ressource à distance (102) selon la revendication 6, comprenant en outre un composant de synchronisation temporelle configuré pour horodater les données périphériques et les données de ressource afin de faciliter la synchronisation des données périphériques et des données de ressource ; et/ou dans lequel les données périphériques comprennent des données vidéo reçues d'une caméra vidéo.

8. Procédé de régulation de l'accès à une ressource industrielle (114), la ressource industrielle comprenant tout dispositif industriel, gamme de dispositifs, ou une machine, incluant, mais sans s'y limiter, un dispositif de commande industriel, un entraînement moteur, un terminal interface homme-machine, IHM, un capteur, un instrument de mesure, une armoire de commande ou un système de vision, le procédé comprenant de :
recevoir, par un dispositif comprenant au moins un processeur, des données de politique de sécurité qui définissent une autorisation d'accès à distance relative à une ressource industrielle ;
envoyer, par le dispositif, une instruction à un dispositif intermédiaire de connectivité (104) pour créer des portails de communication sur une plate-forme cloud, le portail de communication reliant un dispositif à distance à la ressource industrielle via la plate-forme cloud, en fournissant des pipelines de données sécurisés à la ressource industrielle via un serveur de ressource à distance (102), les portails de communication comprenant au moins
un portail d'utilisateur final (106), permettant à des propriétaires de la ressource industrielle de définir ou de modifier à distance les données de politique de sécurité qui régissent l'accès à une ressource industrielle (114), et
un portail (110) de fabricant d'équipement d'origine, OEM, permettant à l'OEM, qui peut être le fabricant de la ressource industrielle, de configurer à distance la ressource industrielle ;
recevoir, par le dispositif, une demande provenant du dispositif à distance via les portails de communication relative à au moins l'une parmi des données de lecture à partir d'une zone de mémoire de la ressource industrielle ou des données d'écriture dans celle-ci ; et
autoriser la demande en réponse à une détermination que la demande n'enfreint pas l'autorisation d'accès à distance.

9. Procédé selon la revendication 8, dans lequel
la réception des données de politique de sécurité comprend la réception de multiples ensembles de données de politique de sécurité correspondant respectivement à de multiples fonctions d'utilisateur, et
l'envoi comprend l'envoi de multiples instructions pour créer de multiples portails de communication respectifs correspondant aux multiples fonctions d'utilisateur ; ou dans lequel la réception des données de politique de sécurité comprend la réception d'une définition d'au moins un ensemble d'éléments de données autorisés à être visualisés ou modifiés via le portail de communication, lequel ensemble d'éléments de données est autorisé à être modifié à distance via le portail de communication, ou à des heures planifiées pendant lesquelles le portail de communication est autorisé à accéder au dispositif industriel.
